# EUROPEAN PATENT APPLICATION

(11) **EP 3 709 386 A1**
(43) Date of publication of application: **16.09.2020**
(21) Application number: 18873518.7
(22) Date of filing: 19.01.2018
(51) Int. Cl.: H01M 2/10, H01M 10/613, H01M 10/625, H01M 10/42, H01M 10/48, H01M 10/0525

(54) **BATTERY PACK STORAGE DEVICE AND CONTROL METHOD THEREFOR**

(30) Priority: 06.11.2017 CN 201711077855
(71) Applicant: NIO Nextev Limited, Central, Hong Kong (HK)
(72) Inventor: ZHANG, Tiewen, Hong Kong (CN)
(74) Representative: Vossius & Partner Patentanwälte Rechtsanwälte mbB
(86) International application number: PCT/CN2018/073418
(87) International publication number: WO 2019/085283

(57) **Abstract**

Provided are a battery pack (3) storage device and a control method therefor. The battery pack (3) storage device comprises: a battery storage (1) for storing a battery pack (3); and a fire-extinguishing box (2) arranged adjacent to the battery storage (1), the fire-extinguishing box (2) having an opening lower than a storage position of the battery pack (3), wherein the battery storage (1) is provided with a linkage mechanism (4), and the linkage mechanism (4) is adapted to move the battery pack (3) such that the battery pack falls into the fire-extinguishing box (2) via the opening; and the fire-extinguishing box (2) is filled with a fluid extinguishant in such an amount that, after the battery pack (3) falls into the fire-extinguishing box (2), the battery pack (3) is immersed in the fluid extinguishant, and the fluid fire-extinguishant does not overflow.

## Description

### Technical Field

The invention relates to the technical field of battery management. Specifically, the invention relates to a battery pack storage device, and further provides a control method for the battery pack storage device.

### Background Art

In recent years, due to the pressures of energy shortage and environmental pollution, electric vehicles have developed rapidly. Accidents caused by the burning of lithium-ion batteries that provide power to electric vehicles are also increasingly concerned by the public.

Batteries that provide power to vehicles are encapsulated in a sturdy metal casing to form a battery pack. The problems with the batteries in an initial stage can only be known by means of monitoring by a battery management system (BMS). If the BMS has a failure in monitoring, the batteries will react and burn in the battery pack, which would not be known until the casing is burnt through. At this time, the use of a chemical inhibitor and a water gun to jet water to the batteries suffers from a low efficiency and even endanger safety officers, and the utilization rate of extinguishants is very low.

### Summary of the Invention

An object of an aspect of the invention is to provide an improved battery pack storage device.

An object of a further aspect of the invention is to provide a control method for a battery pack storage device.

In order to achieve the foregoing objects, a first aspect of the invention is to provide a battery pack storage device. The battery pack storage device comprises:
a battery storage for storing a battery pack; and
a fire-extinguishing box arranged adjacent to the battery storage, the fire-extinguishing box having an opening lower than a storage position of the battery pack;
wherein the battery storage is provided with a linkage mechanism, and the linkage mechanism is adapted to move the battery pack such that the battery pack falls into the fire-extinguishing box via the opening; and
the fire-extinguishing box is filled with a fluid extinguishant in such an amount that, after the battery pack falls into the extinguishing box, the battery pack is immersed in the fluid extinguishant, and the fluid extinguishing agent does not overflow.

Optionally, in the battery pack storage device as described above, a buffer device is arranged on the bottom inside the fire-extinguishing box.

Optionally, in the battery pack storage device as described above, the buffer device is a rubber cushion, a sponge cushion, a spring or an elastic piece.

Optionally, in the battery pack storage device as described above, the linkage mechanism is a conveyor belt, a conveying gear, a conveying rack, or a push rod.

Optionally, in the battery pack storage device as described above, a baffle capable of opening unidirectionally into the interior of the fire-extinguishing box is provided at the opening of the fire-extinguishing box, and the baffle can be automatically closed and/or a breakable disposable baffle is provided at the opening of the fire-extinguishing box.

Optionally, in the battery pack storage device as described above, an exhaust apparatus is mounted at the opening of the fire-extinguishing box.

Optionally, in the battery pack storage device as described above, the battery pack storage device has a sensor for detecting whether each battery pack stored in the battery storage is in a potential fire hazard.

Optionally, in the battery pack storage device as described above, a battery space of the battery storage is provided with a charging space, and a limiting stop block for the battery pack is arranged at the charging space.

In order to achieve the foregoing objects, a second aspect of the invention provides a control method for the battery pack storage device according to any item in the first aspect. The method comprises the following steps:
step A: collecting operating data in a battery pack stored at the battery pack storage device by means of a battery management system, and if the operating data are abnormal, proceeding to step B, and if the data are normal, proceeding to step C;
step B: cooling the battery pack in which the operating data are abnormal, and if the operating data returns to normal, sending a maintenance notification for the battery pack, and if the operating data remains abnormal, proceeding to step D;
step C: monitoring sensed smoke and/or temperature data outside the battery pack, determining whether the sensed smoke and/or temperature data are normal, and if so, determining that the battery pack is normal, and if not, proceeding to step D; and
step D: disconnecting all connections to the battery pack, and moving the battery pack by means of the linkage mechanism such that the battery pack falls into the fire-extinguishing box.

Optionally, in the control method as described above, the operating data include current and/or temperature inside the battery pack.

### Brief Description of the Drawings

The disclosure of the invention will be more apparent with reference to the accompanying drawings. It should be appreciated that these accompanying drawings are merely used for the purpose of description, and are not intended to limit the scope of protection of the invention. In the figures:
Fig. 1 is a schematic diagram of a battery pack storage device according to an embodiment of the invention;
Fig. 2 is a schematic diagram of the battery pack storage device in Fig. 1, also showing stored battery packs;
Fig. 3 is a schematic diagram of the battery pack storage device in Fig. 1, also showing a battery pack that will fall down; and
Fig. 4 is a schematic flowchart of a control method for a battery pack storage device according to an embodiment of the invention.

### Detailed Description of Embodiments

Specific embodiments of the invention are described below in detail with reference to the accompanying drawings. In the accompanying drawings, the same reference numerals denote the same or corresponding technical features.

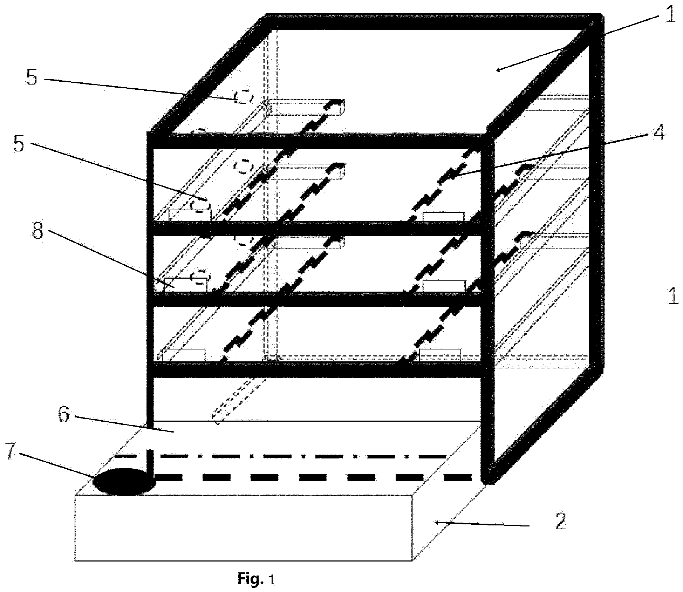

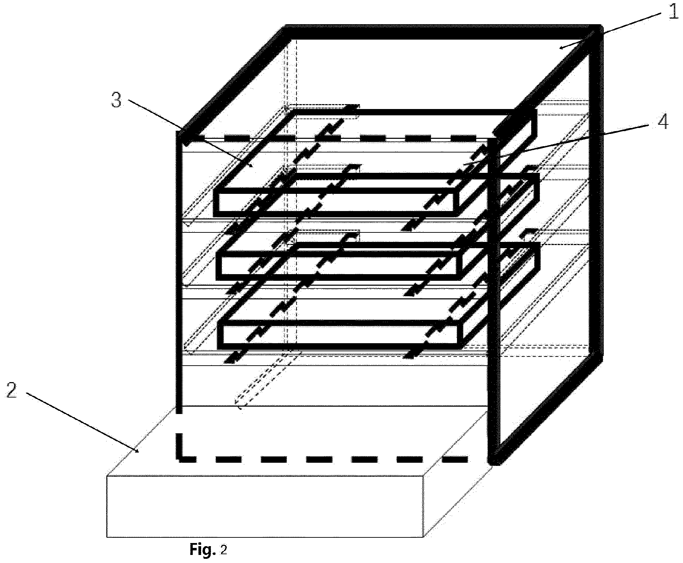

Fig. 1 is a schematic diagram of a battery pack storage device according to an embodiment of the invention. As can be seen from Fig. 1, the battery pack storage device according to this embodiment may comprise a battery storage 1 for storing battery packs 3 (see Fig. 2), and a fire-extinguishing box 2 arranged adjacent to the battery storage 1. In the illustrated example, the fire-extinguishing box 2 is arranged outside the battery storage 1. Specifically, the fire-extinguishing box 2 may be arranged in a direction in which an battery pack enters and exits the battery storage.

In an optional embodiment, the battery storage 1 may be in the form of a frame, or in the form of a cabinet, a box, or the like. The specific form or shape of the battery storage 1 is not specifically limited here, and can be designed as required in optional embodiments. In the illustrated embodiment, a three-layer shelf of the battery storage 1 defines three battery spaces, and is adapted to store three battery packs 3, i.e., the battery space of each layer stores one battery pack 3. In an alternative embodiment, it may also be considered to store multiple battery packs in each layer.

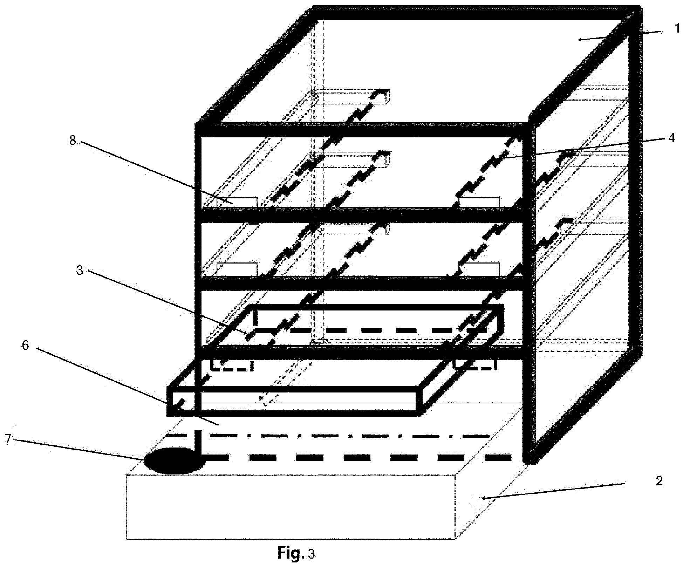

In an alternative embodiment of the invention, the potential fire hazard is eliminated by means of enabling the abnormal battery pack to fall into the fire-extinguishing box 2. In order to enable the battery pack 3 in a potential fire hazard to move to an edge of the battery storage 1 and fall into the fire-extinguishing box 2, the battery storage 1 may be provided with a linkage mechanism 4. The linkage mechanism 4 may be adapted to move the battery pack 3 and enable the battery pack to fall into the fire-extinguishing box via an opening of the fire-extinguishing box 2. In the illustrated example, when the battery pack 3 is pushed to an edge of each layer of the frame of the battery storage, it will fall over under the action of gravity and fall into the fire-extinguishing box 2 (see Fig. 3). In the figure, the linkage mechanism 4 is schematically shown, and its specific structure may be a conveyor belt, a conveying gear, a conveying rack, a push rod, etc., which will not be exhaustively listed here. The linkage mechanism may be driven by an electric motor or in other ways.

The fire-extinguishing box 2 may be provided with an opening (not illustrated). According to the illustrated example, the opening may be located at the top of the fire-extinguishing box 2. It can be understood that the opening should be lower than the storage position of the battery pack 3 in the battery storage. In this way, when the linkage mechanism 4 moves the battery pack 3 to the edge of the battery storage, the battery pack can be detached from the battery storage 1 under the action of gravity and smoothly falls down and into the fire-extinguishing box 2 via the opening. In an alternative embodiment, if the top of the fire-extinguishing box 2 is high, it may also be considered to provide an opening on a side surface of the fire-extinguishing box to facilitate the falling of the battery pack in a potential fire hazard.

According to an aspect of the invention, in order to facilitate the battery pack 3 to smoothly fall into the fire-extinguishing box 2 via the opening of the fire-extinguishing box 2, the size of the opening may be appropriately larger than the size of the battery pack 3. In a specific embodiment, the size (and/or the shape) of the fire-extinguishing box may also be specifically designed and determined according to the size of the specific battery pack, such that the battery pack can smoothly fall into the fire-extinguishing box from the storage position of the battery storage.

In order to effectively eliminate the potential fire hazard of the battery pack in the fire-extinguishing box, the fire-extinguishing box 2 may contain a fluid extinguishant, for example but not limited to liquids such as water, , or a gas that is incombustible or cannot support combustion and is heavier than air. In an alternative embodiment, the fluid extinguishant in the fire-extinguishing box 3 should not be too much or too full, and a space can be reserved according to the size of the battery pack 3, such that the battery pack can be completely immersed in the fluid extinguishant after it falls into the fire-extinguishing box 3, and the fluid extinguishant will not overflow. It is conceivable that if the amount of the fluid extinguishant is too small, it may not be enough to submerge the battery pack to eliminate the potential fire hazard, and if the amount of the fluid extinguishant is too large, the fluid extinguishant may overflow to influence or pollute surroundings or facilities, which is not desirable.

As described above, in the illustrated embodiment, the battery storage 1 may comprise a layered shelf to store battery packs 3, with a battery space being formed in each layer of the shelf, such that the battery packs 3 may be stored in layers in the battery storage 1, and are stored in three layers from top to bottom in the figure. Herein, reference can be made to Fig. 2. Fig. 2 is a schematic diagram of the battery pack storage device in Fig. 1, also showing stored battery packs 3. It can be seen that, for clarity, as compared with Fig. 1, several components are omitted in the schematic diagram of the battery storage 1 in Fig. 2.

It should be noted that in an optional embodiment, different numbers of tiers can be provided according to practical space conditions or other conditions. For example, the battery storage can comprise one, two or more tiers of shelves for storing one tier of battery pack, two tiers of battery packs or more tiers of battery packs, etc. In an alternative embodiment, each charging space in the battery storage may be provided with a battery space. In this way, the battery of the battery pack can be charged during the storage of the battery pack. As can be seen from the figure, each charging space of the battery storage may be provided with a limiting stop block 8 that allows the battery to accurately enter the charging space for charging and has an instrument limiting effect. It can be understood that an execution mechanism is additionally provided for the limiting stop block 8 to open the limiting stop block under specific conditions through software programming.

As shown in the figure, the battery storage 1 may provide each battery pack 3 in each layer with a respective sensor 5 to sense whether each respective battery pack is in a potential fire hazard. The sensors 5 may include, for example but not limited to a smoke detector and/or a temperature detector, etc. In an alternative embodiment, other types of detectors that facilitate monitoring potential fire hazards may also be selected and used, which will not be listed here.

Fig. 3 is a schematic diagram of the battery pack storage device in Fig. 1, also showing a battery pack that will fall down. Referring to Fig. 3, it can be seen that the linkage mechanism in the battery storage 1 can push the battery pack 3 out of the battery storage 1, such that the battery pack 3 falls into the fire-extinguishing box via the opening of the fire-extinguishing box. When a certain battery pack 3 is detected as being in a potential fire hazard, it can be moved and fall into the fire-extinguishing box 2. Since the fire-extinguishing box 2 contains the fluid extinguishant, the battery pack 3 that has fallen therein can be submerged. In an optional embodiment, in order to prevent the adverse impact on the battery pack 3 falling into the fire-extinguishing box, the bottom of the fire-extinguishing box may be provided with a buffer item or a buffer device (not shown in the figure). For example, the buffer item or the buffer device may be such as but not limited to a rubber cushion, a sponge cushion, a spring or an elastic piece, etc.

In addition, in order to prevent the splash of the fluid extinguishant when the battery pack falls into the fire-extinguishing box, a baffle 6 capable of opening unidirectionally into the interior of the fire-extinguishing box 2 may be provided at the opening of the fire-extinguishing box, and the baffle 6 can automatically return to a closed position. In this way, upon that the battery pack after falling into the fire-extinguishing box is submerged in the extinguishant, the baffle 6 can automatically close to close the opening of the fire-extinguishing box, such that the splashed extinguishant will be blocked by the baffle inside the fire-extinguishing box and will not be splashed out. It can be understood that the baffle may be only one, or may be two that open against each other, or may be provided in other numbers and arrangements.

In an alternative embodiment, a disposable baffle made of a frangible material may also be used. Such a disposable baffle will be broken when a battery falls into the fire-extinguishing box, and will not hinder the battery pack in a potential fire hazard from falling into the fire-extinguishing box. It may be appreciated that it is not excluded here that in some embodiments, a baffle that opens unidirectionally into the interior and a disposable baffle of this breakable material may be provided at the same time. In an optional embodiment, the baffle that opens unidirectionally and the breakable disposable baffle may also be arranged in a stacked manner at the opening of the fire-extinguishing box.

In an alternative embodiment, an exhaust apparatus 7 may be mounted at the opening of the fire-extinguishing box 2. For example, it may be a blower or a fan that is arranged at the opening of the fire-extinguishing box.

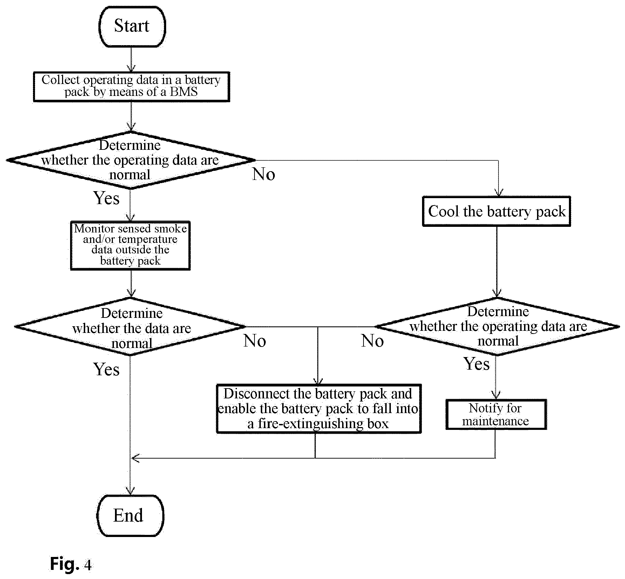

Fig. 4 is a schematic flowchart of a control method for a battery pack storage device according to an embodiment of the invention. It can be understood that, for effectively monitoring the state of the battery pack, the control method may be carried out continuously, or may be carried out repeatedly at predetermined time intervals, so as to ensure that the potential fire hazard can be detected in time and eliminated as soon as possible.

As can be seen from the figure, the control method for a battery pack storage device may comprise the following steps.

In step A, operating data in a battery pack stored at the battery pack storage device are collected by a battery management system (BMS). Optionally, the operating data may include the data of temperature and current in the battery, and may also include other conceivable data that can represent the battery performance. Taking the battery temperature and current data as an example, when the battery temperature increases or the current intensity suddenly increases, it can be determined that the operating data are abnormal, indicating that the corresponding battery or battery pack may be in a potential safety hazard. If the operating data are abnormal, the method proceeds to step B to perform primary treatment for the corresponding battery; and if the data are normal, the method proceeds to step C for further monitoring.

In step B, since it has been detected that the operating data of the corresponding battery or battery pack are abnormal, primary treatment is performed first in step B, for example, cooling the battery pack with abnormal operating data. If the operating data of the battery or battery pack return to normal after cooling, it is considered that the battery or battery pack is not in a potential safety hazard at this time, and the battery or battery pack can be restored through maintenance. At this time, a maintenance notification for the battery pack can be sent. However, if it is found that the operating data of the battery or battery pack remains abnormal after cooling, it is considered that the battery or battery pack is in a potential safety hazard or a fire risk, and it is necessary to proceed to step D for decisive treatment.

In step C, the data of the outside of the battery pack can be determined, for example, by means of common smoke/temperature detection, and once the smoke and/or high temperature is detected, it is determined that the corresponding battery pack is in a potential fire hazard, and it is necessary to proceed to step D for decisive treatment. If no smoke or high temperature is detected outside the battery pack, it can be determined that the battery pack is normal.

In step D, since it has been determined that the battery pack is in a serious potential safety hazard or potential fire hazard, all connections to the battery pack are disconnected, and the battery pack is removed from the battery storage by means of the linkage mechanism and falls into the fire-extinguishing box, achieving effective fire-extinguishing measures.

It can be understood that, it is only the end of a control cycle after completing steps A to D, and in order to ensure the long-term safety of the battery packs and the battery pack storage device, it is necessary to repeat the control method continuously or periodically so as to perform continuous loop control to achieve monitoring of the entire system.

The following is a further detailed analysis with reference to the aforementioned control process. Here, the control of the battery can be basically divided into a case where the battery is burning and a case where the battery is not burning.

It can be understood that, in the current and temperature change data collected by the BMS, if the rate exceeds the normal value, the system turns on a water cooling device for cooling the battery pack. In this process, the changes in current and temperature of the battery are continuously monitored, and if the current and temperature return to normal, the system will be notified that the battery in the battery pack is abnormal and should stop operating for maintenance. At this time, it is not found that the battery is burning. If the water cooling system is turned on but the battery is not successfully cooled, the BMS will send a signal to the system, so that the system disconnects all connections to the battery pack . After the battery pack is disconnected, an smoke evacuation apparatus of the fire-extinguishing box and a mechanical limiting stop block arranged on the battery rack of the battery storage for protecting the battery pack will be tuned on, and a conveyor belt for conveying batteries starts to move to deliver the battery out of the battery storage. The battery naturally falls into the fire-extinguishing box at a lower portion of the outer side of the battery storage under the action of gravity. At this time, it is determined that the battery is burning.

If the BMS fails, the current and temperature changes in the battery cannot be detected at the beginning. At this time, if the smoke detector and the temperature detector arranged outside the battery pack detect abnormal conditions, it is most likely that the electrolyte is burning, and a pressure release valve of the battery pack is physically opened to release heat and small amount of smoke. At this time, the smoke detector and the temperature detector will send a signal to the system (in this process, a fire control host can be provided independently or embedded in a battery swap operation system of a battery swap station), and at this time the system will still disconnect all connections to the battery pack. After the battery pack is disconnected, an smoke evacuation apparatus of the fire-extinguishing box and a mechanical limiting stop block arranged on the battery rack of the battery storage for protecting the battery pack will be tuned on, and a conveyor belt for conveying batteries starts to move to deliver the battery out of the battery storage. The battery naturally falls into the fire-extinguishing box at a lower portion of the outer side of the battery storage under the action of gravity. At this time, it is still determined that the battery is burning.

The battery pack storage device and the control method of the invention can be widely used in places where lithium-ion battery packs are stored, and the control method is an effective method for solving the problem of fire hazard of lithium-ion battery packs. For example, in each embodiment, the battery pack storage device can be applied to battery swap stations for new energy automobiles. In the application of battery swap stations for new energy automobiles, when a lithium-ion battery in the battery storage is short-circuited, overcharged, over-discharged, or burns for other reasons, the change in the battery can be accurately detected by the BMS or can be monitored by apparatuses, such as the smoke detector, the temperature detector, arranged near the battery pack, a signal is sent to a fire control host or a battery swap station system control center through software programming. The system will disconnect all connections to the battery pack, the host activates the linkage mechanism, and the battery pack is pushed out of the battery storage and falls into the fire-extinguishing box outside the battery storage, so that the lithium-ion battery is submerged in a large amount of water to extinguish the fire. It can be understood that this method is essentially to enable the battery pack to fall into the fire-extinguishing box below under the action of gravity, and the battery pack is immersed in a large amount of fluid extinguishant to eliminate the potential fire hazard of the battery pack.

Further, according to the teaching of the invention, it is conceivable that the corresponding battery pack storage device and control method can also be applied to places where other types of batteries or battery packs (non-lithium-ion batteries or battery packs) are stored.

In the invention, the burning battery pack is directly put into the fluid extinguishant (such as water), which is the first application of putting out a fire of battery. This method is not only efficient, practical, and simple, but also does not require additional water for firefighting and has no loss of water damage. Moreover, there is no open flame, heat radiation or a large amount of smoke and dust, which will not cause the spread of fire or secondary explosion, and has high firefighting efficiency, low cost, and low impact. More importantly, this method directly sends out the faulty battery pack, does not affect the normal charging of other batteries, does not need to power off the entire battery swap station, and will not affect the operation of the entire battery swap station.

Further, this method relies on the apparatus of the battery storage itself, and can automatically extinguish the fire by additionally providing a mechanical limiting execution mechanism and software programming, which is simple and easy to implement and can be achieved without additional investment. The battery pack is directly put into the fire-extinguishing box, the extinguishant (such as water) enters the battery pack to directly cool the battery, and if the battery pack is burned through, the extinguishant that enters the battery pack can directly dilute the reactant to rapidly reduce the reaction rate. The efficiency is high, the cost is low, and the invention can be widely used in battery swap stations and various battery warehouses.

The technical scope of the invention is not merely limited to the above description. Those skilled in the art can make various changes and modifications to the above embodiments without departing from the technical idea of the invention, and these changes and modifications shall fall within the scope of the invention.

## Claims

1. A battery pack storage device, **characterized by** comprising:
a battery storage for storing a battery pack; and
a fire-extinguishing box arranged adjacent to the battery storage, the fire-extinguishing box having an opening lower than a storage position of the battery pack;
wherein the battery storage is provided with a linkage mechanism, and the linkage mechanism is adapted to move the battery pack such that the battery pack falls into the fire-extinguishing box via the opening; and
the fire-extinguishing box is filled with a fluid extinguishant in such an amount that, after the battery pack falls into the extinguishing box, the battery pack is immersed in the fluid extinguishant, and the fluid extinguishing agent does not overflow.

2. The battery pack storage device of claim 1, **characterized in that** a buffer device is arranged on the bottom inside the fire-extinguishing box.

3. The battery pack storage device according to claim 2, **characterized in that** the buffer device is a rubber cushion, a sponge cushion, a spring, or an elastic piece.

4. The battery pack storage device of claim 1, **characterized in that** the linkage mechanism is a conveyor belt, a conveying gear, a conveying rack, or a push rod.

5. The battery pack storage device of claim 1, **characterized in that** a baffle capable of opening unidirectionally into the interior of the fire-extinguishing box is provided at the opening of the fire-extinguishing box, and the baffle can be automatically closed and/or a breakable disposable baffle is provided at the opening of the fire-extinguishing box.

6. The battery pack storage device of claim 1, **characterized in that** an exhaust apparatus is mounted at the opening of the fire-extinguishing box.

7. The battery pack storage device of any one of claims 1-6, **characterized in that** the battery pack storage device has a sensor for detecting whether each battery pack stored in the battery storage is in a potential fire hazard.

8. The battery pack storage device of claim 1, **characterized in that** a battery space of the battery storage is provided with a charging space, and a limiting stop block for the battery pack is arranged at the charging space.

9. A control method for the battery pack storage device according to any one of claims 1 to 8, **characterized in that** the method comprises the following steps:
step A: collecting operating data in a battery pack stored at the battery pack storage device by means of a battery management system, and if the operating data are abnormal, proceeding to step B, and if the data are normal, proceeding to step C;
step B: cooling the battery pack in which the operating data are abnormal, and if the operating data returns to normal, sending a maintenance notification for the battery pack, and if the operating data remains abnormal, proceeding to step D;
step C: monitoring sensed smoke and/or temperature data outside the battery pack, determining whether the sensed smoke and/or temperature data are normal, and if so, determining that the battery pack is normal, and if not, proceeding to step D; and
step D: disconnecting all connections to the battery pack, and moving the battery pack by means of the linkage mechanism such that the battery pack falls into the fire-extinguishing box.

10. The control method according to claim 9, **characterized in that** the operating data include current and/or temperature inside the battery pack.
